# EUROPÄISCHE PATENTSCHRIFT

(11) **EP 0 573 868 B1**
(45) Veröffentlichungstag und Bekanntmachung des Hinweises auf die Patenterteilung: **28.02.1996**
(21) Anmeldenummer: 93108741.5
(22) Anmeldetag: 01.06.1993
(51) Int. Cl.: C08F 210/02, C08F 2/00

(54) **Verfahren zur Herstellung von Copolymerisaten des Ethylens mit Acrylsäure oder Gemischen von Acrylsäure oder Gemischen von Acrylsäure mit Acrylsäureestern**
Process for the manufacture of copolymers of ethylene and acrylic acid or mixtures of acrylic acid or mixtures of acrylic acid and acrylic acid esters
Procédé de préparation de copolymères de l'éthylène et d'acide acrylique ou des mélanges d'acide acrylique ou des mélanges d'acide acrylique et d'esters d'acide acrylique

(30) Priorität: 11.06.1992 DE 4219128
(43) Veröffentlichungstag der Anmeldung: 15.12.1993
(73) Patentinhaber: BASF Aktiengesellschaft, D-67063 Ludwigshafen (DE)
(72) Erfinder: Pfleger, Klaus, Dr., W-5047 Wesseling (DE); Schiller, Siegfried, W-5040 Bruehl (DE); Arnold, Gerhard, W-5047 Wesseling (DE); Mueller, Herbert, W-5040 Bruehl (DE); Schumacher, Manfred, W-5205 Sankt Augustin (DE)

(56) Entgegenhaltungen:
- DE-A- 2 617 411
- DE-B- 1 177 344
- US-A- 3 254 071

## Beschreibung

Die Erfindung betrifft ein Verfahren zur Herstellung von Copolymerisaten des Ethylens mit Acrylsäure oder Gemischen von Acrylsäure mit Acrylsäureestern durch Copolymerisation von 100 Gewichtsteilen Ethylen mit 0,5 bis 25 Gewichtsteilen Acrylsäure oder Lösungen von Acrylsäure in Acrylsäureestern in einem kontinuierlich betriebenen, rohrförmigen Polymerisationssystem bei Drücken von 500 bis 3000 bar und Temperaturen von 150 bis 300°C in Gegenwart von radikalisch zerfallenden Polymerisationsinitiatoren und gegebenenfalls Polymerisationsreglern.

Die bei obiger Polymerisation entstehenden Ethylen-Acrylsäure-Copolymerisate bzw. Ethylen-Acrylsäureester-Copolymerisate - im weiteren Copolymerisate genannt-werden beispielsweise als Folienmaterial, Kabelummantelungen bzw. Klebstoffe verwendet.

Das Verfahren zur Herstellung der Copolymerisate erfolgt in Rohrreaktoren, die beispielsweise in "Ullmann's Encyclopädie der technischen Chemie", 4. Auflage, Band 19, Seiten 173 bis 175, beschrieben sind.

Unter Ethylen-Acrylsäure-Copolymerisaten bzw. Ethylen-Acrylsäure-Acrylsäureester-Copolymerisaten werden die Copolymerisate des Ethylens verstanden, die bei den genannten Temperatur- und Druckverhältnissen, bevorzugt bei einem Druck von 1500 bis 3000 bar und einer Temperatur von 150 bis 300°C, herstellbar sind. Die erhaltenen Copolymerisate haben einen Gehalt an einpolymerisierten Comonomeren von 0,5 bis 25 Gew.-%, bevorzugt 1 bis 20 Gew.-%; der Schmelzindex der Produkte liegt bei 0,1 bis 30 g/10 min., bestimmt nach ASTM-D 1238-65T bei einer Temperatur von 190°C und einem Auflagegewicht von 2,16 kg. Die Dichte der Copolymerisate liegt im Bereich von 0,9250 bis 0,9360 g/cm³, gemessen nach DIN 53479.

Außer Acrylsäure werden auch Gemische von Acrylsäure mit Acrylsäureestern eingesetzt. Als Acrylsäureester kommen sämtliche mit Ethylen bei den angegebenen Temperatur- und Druckverhältnissen copolymerisierbaren Acrylsäureester in Betracht. Solche Comonomere sind z.B. Acryl- und Methacrylsäureester mit C₁- bis C₈-, vorzugsweise C₁- bis C₆-Alkanolen. Insbesondere bevorzugt sind Methyl- und normal-Butylacrylat in Lösung mit Acrylsäure. Bevorzugt enthalten die Acrylsäureester-Acrylsäurelösungen bis zu 50 Gew.-%, insbesondere bis zu 35 Gew.-% Acrylsäure.

Das Ethylen wird mit der Acrylsäure oder den Lösungen von Acrylsäure in Acrylsäureestern in Gegenwart radikalischer Polymerisationsinitiatoren copolymerisiert. Unter radikalischen Polymerisationsinitiatoren sollen diejenigen Katalysatoren verstanden werden, die auch bei der Homopolymerisation des Ethylens unter hohem Druck verwendet werden. Geeignet ist beispielsweise Sauerstoff, zweckmäßigerweise in Mengen von 2 bis 100 Mol-ppm, bezogen auf das zu polymerisierende Ethylen. In Betracht kommen auch Peroxide, Hydroperoxide und andere Radikalbildner sowie Gemische von Peroxiden und Mischungen aus Sauerstoff und Peroxiden. Als Beispiele für Peroxide und Hydroperoxide seien genannt: tert.-Butylperoxypivalat, Di-tert.-Butylperoxid, tert.-Butylhydroperoxid, tert.-Butylperbenzoat, p-Menthanhydroperoxid und Dilauroylperoxid. Unter radikalischen Polymerisationsinitiatoren sollen auch Verbindungen wie Azo-iso-buttersäuredinitril verstanden werden. Man kann auch Mischungen aus Sauerstoff und einem oder mehreren Peroxiden verwenden. Bevorzugt wird die Copolymerisation des Ethylens mit Acrylsäure oder mit Lösungen aus Acrylsäure und Acrylsäureestern durch Sauerstoff oder tert.-Butylperpivalat initiiert.

Üblicherweise arbeitet man in Gegenwart von Polymerisationsreglern. Mit Hilfe der Polymerisationsregler ist es möglich, den Schmelzindex der entstehenden Ethylen-Copolymerisate einzustellen. Als Regler eignen sich beispielsweise Wasserstoff, Ketone, Aldehyde, Alkohole, Ether oder normale und verzweigte Kohlenwasserstoffe.

Vorzugsweise arbeitet man mit Propylen, Propionaldehyd oder Propan. Die Polymerisationsregler werden im allgemeinen in Mengen von 0,2 bis 5 mol-%, bezogen auf das zu polymerisierende Ethylen, eingesetzt.

Die Polymerisation wird im allgemeinen in Abwesenheit eines Lösungsmittels durchgeführt. Die geringen Mengen an inertem Lösungsmittel, wie Benzol, Mineralöl, in denen die Polymerisationsinitiatoren (Peroxide) gelöst werden, können gegenüber den anderen Einsatzstoffen vernachlässigt werden. Wird mit Sauerstoff als Polymerisationsinitiator gearbeitet, kann jegliches Lösungsmittel entfallen.

Die Herstellung der vorab beschriebenen Copolymerisate ist bekannt und in der Patentliteratur beschrieben, so beispielsweise in der US-Patentschrift 4 080 411 und der deutschen Patentschrift DE 2 617 412.

Bei den bekannten Verfahren kommt es in der Praxis häufig zu Störungen im Produktionsprozeß. Die Störungen werden verursacht durch Temperaturschwankungen, die am Anfang des Reaktors beginnen und sich über den gesamten Reaktionsbereich fortsetzen. Im Extremfall werden die Temperaturschwankungen so stark, daß Zersetzungen des Reaktionsgemisches die Folge sind.

Der vorliegenden Erfindung lag daher die Aufgabe zugrunde, die Reaktionsführung der Copolymerisation des Ethylens mit Acrylsäure oder mit Lösungen von Acrylsäure in Acrylsäureestern so stabil zu gestalten, daß die genannten Störungen und Zersetzungen des Reaktionsgemisches vermieden werden.

Die Aufgabe wird erfindungsgemäß dadurch gelöst, daß die Temperaturführung für das Reaktionsgemisch bestehend aus Ethylen, Acrylsäure oder einer Lösung von Acrylsäure in Acrylsäureestern nach dem Eintritt in die Reaktionszone derart gestaltet wird, daß der Quotient dT/dt (Temperaturanstieg pro Zeiteinheit) bei einem Wert zwischen 0,7 und 1,2°C pro Sekunde eingestellt und konstant gehalten wird.

Eine bevorzugte Wahl des Quotienten Temperaturanstieg pro Zeiteinheit beträgt 0,8 bis 1,0°C pro Sekunde.

Bei dem erfindungsgemäßen Verfahren wird nun so verfahren, daß die Temperaturen für das Reaktionsgemisch nach seinem Eintritt in die Reaktionszone - bevor das Maximum der Reaktionstemperaturen erreicht wird - in einem exakt definierten Bereich eingestellt und konstant gehalten werden.

Es zeigte sich, daß ein stabiles Reaktionsverhalten erreicht wird, wenn je nach Zusammensetzung des Reaktionsgemisches der Quotient dT/dt bei Werten von 0,7 bis 1,2°C pro Sekunde, vorzugsweise zwischen 0,8 und 1,0°C pro Sekunde eingestellt und konstant gehalten wird.

Die Einstellung der Temperaturführung wird in den ersten zehn Rohren der Reaktionszone vorgenommen, dies bedeutet je nach Reaktortyp eine Strecke von 100 bis 260 Metern; sie erfolgt über die Menge und die Temperatur des durch die Kühlmäntel der Reaktionsrohre durchgeleiteten Kühlmediums im Zusammenspiel mit der Konzentration an Polymerisationsinitiator und der Gastemperatur des Reaktionsgemisches am Eingang zur Reaktionszone. Als Kühlmedium wird in bekannter Weise Druckwasser eingesetzt.

In einer bevorzugten Ausgestaltung des erfindungsgemäßen Verfahrens arbeitet man mit einer vom übrigen Heißwasser-Kühlkreislauf getrennten Kühleinrichtung für die Sektion, in der der Quotient dT/dt konstant gehalten wird.

Die Gastemperatur des Reaktionsgemisches am Eingang zur Reaktionszone wird auf maximal 170°C begrenzt.

Wenn hingegen ohne exakt definierte Temperaturführung für das Reaktionsgemisch in den ersten zehn Rohren der Reaktionszone gearbeitet wird, treten sehr starke Temperaturschwankungen ein, die schon nach kurzer Betriebszeit zu heftigen Zersetzungen führen.

Die genannten starken Temperaturschwankungen können mit der durch örtliche Überhitzung auftretenden Reaktion der Acrylsäure mit sich selbst erklärt werden. Die Acrylsäure und ihre Ester reagieren um ein Vielfaches schneller als Ethylen, wobei sich Poly-Acrylate bilden. Letztere haben die Eigenschaft, mit Metallen sehr innige Verbindungen einzugehen; es kommt zur Ausprägung von sehr hartnäckigen Belägen auf den Innenwänden der Reaktorrohre.

Als Folge der Wandbeläge wird der Wärmeübergang stark reduziert, wodurch sich die Instabilität des Reaktionsgeschehens weiter verstärkt. Ab einer gewissen Stärke des Wandbelages wird der Wärmeübergang derart ungenügend, daß es zu Zersetzungen des Reaktionsgemisches kommt.

Nach dem erfindungsgemäßen Verfahren treten die geschilderten Störungen nicht auf; überraschenderweise kommt es im gesamten Bereich der Reaktionszone nur noch zu vertretbaren Temperaturschwankungen und ein längerer Betrieb des Reaktors ohne Zersetzung wird möglich.

### Beispiel 1

In einem Rohrreaktor wurde ein Gemisch bestehend aus 1000 Gewichtsteilen Ethylen, 13 Gewichtsteilen Acrylsäure, 8 Mol-ppm Sauerstoff, bezogen auf Ethylen, und 3,5 Gewichtsteilen Propylen als Polymerisationsregler bei einem Druck von 2100 bar copolymerisiert.

Das Reaktionsgemisch wurde mit einer Temperatur von 165°C in die Reaktionszone eingeführt.

Der Temperaturanstieg in den ersten zehn Rohren der Reaktionszone wurde bei einem Wert von dT/dt = 0,9°C pro Sekunde konstant gehalten.

Hierzu wurde Heißwasser mit einer Eintrittstemperatur von 190°C durch die Mäntel der Reaktionsrohre gefahren; die Durchflußmenge an Heißwasser betrug 9,4 m³/Stunde für die betreffende Sektion. Das Reaktionsgemisch erreichte im zweiten Teil der Reaktionszone eine Maximaltemperatur von 240°C.

Die Temperaturen über die gesamte Reaktionszone schwankten nur gering. Zersetzungen traten auch nach mehrtägigem Betrieb nicht auf.

Es wurden 182 g Ethylen-Acrylsäure-Copolymerisat erhalten mit folgenden Analysewerten:

| | |
|---|---|
| Schmelzindex | 7,45 ± 0,1 g/10 Min. |
| Dichte | 0,9348 g/cm³ |
| Gehalt an freier Acrylsäure | 5,35 ± 0,1 Gew.-% |

### Beispiel 2

Eine Mischung von 1000 Gewichtsteilen Ethylen, 10 Gewichtsteilen Acrylsäure, 25 Gewichtsteilen normal-Butylacrylat, 9 Mol-ppm Sauerstoff, bezogen auf Ethylen, sowie 3,1 Gewichtsteile Propylen als Polymerisationsregler wurde in einem Rohrreaktor unter einem Druck von 2100 bar polymerisiert.

Das Reaktionsgemisch wurde mit einer Temperatur von 168°C in die Reaktionszone eingeführt.

Der Temperaturanstieg für das Reaktionsgemisch wurde in den ersten zehn Reaktionsrohren auf dT/dt = 1,2°C pro Sekunde eingestellt und bei diesem Wert konstant gehalten.

Hierzu wurde Heißwasser mit einer Eintrittstemperatur von 190°C durch die Mäntel der Reaktionsrohre geleitet; die Durchflußmenge betrug 8,8 m³/Stunde für die betreffende Sektion.

Das Reaktionsgemisch erreichte in der zweiten Hälfte der Reaktionszone seine Maximaltemperatur von 252°C.

Die Temperaturen über die gesamte Reaktionszone schwankten nur gering; Zersetzungen ereigneten sich auch nach mehrtägigem Betrieb nicht.

Es wurden 197 kg eines Mischpolymerisates gewonnen, das Acrylsäure und normal-Butylacrylat einpolymerisiert enthielt.

Die Analysen zeigten folgende Werte:

| | |
|---|---|
| Schmelzindex | 6,95 ± 0,1 g/10 Min. |
| Dichte | 0,9316 g/cm³ |
| Gehalt an freier Acrylsäure | 4,70 ± 0,1 Gew.-% |
| Gehalt an normal-Butylacrylat | 9,30 ± 0,1 Gew.-% |

### Vergleichsbeispiel 1

Wie im Beispiel 1 wurde eine Mischung aus 1000 Gewichtsteilen Ethylen, 13 Gewichtsteilen Acrylsäure, 8 Mol-ppm Sauerstoff, bezogen auf Ethylen, und 3,5 Gewichtsteile Propylen als Polymerisationsregler bei einem Druck von 2100 bar zur Reaktion gebracht.

Die Polymerisationsbedingungen stimmten bis auf eine Ausnahme mit denen in Beispiel 1 überein. Im Gegensatz zu Beispiel 1 wurde die Temperaturführung am Eingang der Reaktionszone nicht bei einem definierten Wert eingestellt, d.h. der Quotient dT/dt für das Reaktionsgemisch beim Durchlaufen der ersten Rohre des Reaktors wurde nicht konstant gehalten.

In der zweiten Hälfte der Reaktionszone erreichte das Reaktionsgemisch Maximaltemperaturen von 245 bis 280°C, wobei sich die Lage des Maximums veränderte.

Schon nach relativ kurzen Betriebszeiten (nach 1, 3 bzw. 10 Stunden) ereigneten sich Zersetzungen.

Es wurden 185 kg Ethylen-Acrylsäure-Copolymerisat erhalten mit folgenden Analysenwerten:

| | |
|---|---|
| Schmelzindex | 7,3 bis 8,2 g/10 Min. |
| Dichte | 0,9329 g/cm³ |
| Gehalt an freier Acrylsäure | 5,2 bis 5,9 Gew.-% |

### Vergleichsbeispiel 2

Dem Reaktor wurde wie im Beispiel 2 eine Mischung aus 1000 Gewichtsteilen Ethylen, 10 Gewichtsteilen Acrylsäure, 25 Gewichtsteilen normal-Butylacrylat, 9 Mol-ppm Sauerstoff und 3,1 Gewichtsteile Propylen zugeführt und unter einem Druck von 2100 bar polymerisiert.

Die Reaktionsbedingungen stimmten bis auf eine Ausnahme mit denen im Beispiel 2 überein. In Abänderung zu Beispiel 2 wurde der Temperaturanstieg des Reaktionsgemisches nach seinem Eintritt in die Reaktionszone bzw. beim Durchlaufen der ersten zehn Reaktionsrohre nicht gezielt bei einem konstanten Wert gehalten.

Das Reaktionsgemisch erreichte in der zweiten Hälfte Maximaltemperaturen von 254 bis 273°C, wobei es auch zur Verschiebung des Maximums kam.

Schon nach relativ kurzen Betriebszeiten ereigneten sich Zersetzungen; die maximale Betriebszeit betrug drei Tage, war allerdings von starken Temperaturschwankungen in der gesamten Reaktionszone begleitet.

Es wurden 190 kg Mischpolymerisat erhalten, das Acrylsäure und normal-Butylacrylat einpolymerisiert enthielt.

Die Analysen zeigten folgende Werte:

| | |
|---|---|
| Schmelzindex | 6,8 bis 7,7 g/10 Min. |
| Dichte | 0,9309 g/cm³ |
| Gehalt an freier Acrylsäure | 4,3 bis 4,6 Gew.-% |
| Gehalt an normal-Butylacrylat | 8,8 bis 9,5 Gew.-% |

## Patentansprüche

1. Verfahren zur Herstellung von Copolymerisaten des Ethylens mit Acrylsäure oder Gemischen von Acrylsäure mit Acrylsäureestern durch Copolymerisation von 100 Gewichtsteilen Ethylen mit 0,5 bis 25 Gewichtsteilen Acrylsäure oder Lösungen von Acrylsäure in Acrylsäureestern in einem kontinuierlich betriebenen, rohrförmigen Polymerisationssystem bei Drücken von 500 bis 3000 bar und Temperaturen von 150 bis 300°C in Gegenwart von radikalisch zerfallenden Polymerisationsinitiatoren und gegebenenfalls Polymerisationsreglern, dadurch gekennzeichnet, daß die Temperaturführung für das Reaktionsgemisch bestehend aus Ethylen, Acrylsäure oder einer Lösung von Acrylsäure in Acrylsäureestern nach dem Eintritt in die Reaktionszone derart gestaltet wird, daß der Quotient dT/dt (Temperaturanstieg pro Zeiteinheit) bei einem Wert zwischen 0,7 und 1,2°C pro Sekunde eingestellt und konstant gehalten wird.

2. Verfahren nach Anspruch 1, dadurch gekennzeichnet, daß der Quotient dT/dt bei einem Wert zwischen 0,8 und 1,0°C pro Sekunde eingestellt und konstant gehalten wird.

## Claims

1. A process for preparing copolymers of ethylene with acrylic acid or mixtures of acrylic acid with acrylic esters by copolymerizing 100 parts by weight of ethylene with from 0.5 to 25 parts by weight of acrylic acid or solutions of acrylic acid in acrylic esters in a continuous tubular polymerization system at from 500 to 3000 bar and from 150 to 300°C in the presence of free radical polymerization initiators and optionally polymerization regulators, which comprises controlling the temperature of the reaction mixture, comprising ethylene, an acrylic acid or a solution of acrylic acid in acrylic esters, after entry into the reaction zone in such a way that the ratio dT/dt (temperature increase per unit time) is set to and kept constant at a value within the range from 0.7 to 1.2°C per second.

2. A process as claimed in claim 1, wherein the ratio dT/dt is set to and kept constant at a value within the range from 0.8 to 1.0°C per second.

## Revendications

1. Procédé de préparation de copolymérisats de l'éthylène avec l'acide acrylique ou des mélanges d'acide acrylique avec des esters d'acide acrylique par copolymérisation de 100 parties en poids d'éthylène avec 0,5 à 25 parties en poids d'acide acrylique ou de solution d'acide acrylique dans des esters d'acide acrylique, dans un système de polymérisation tubulaire fonctionnant en continu, sous des pressions comprises entre 500 et 3000 bar et à des températures comprises entre 150 et 300°C, en présence d'initiateurs de polymérisation se décomposant en radicaux, et éventuellement de régulateurs de polymérisation, caractérisé par le fait que l'allure de la température du mélange réactionnel composé d'éthylène, d'acide acrylique ou d'une solution d'acide acrylique dans des esters d'acide acrylique, après son entrée dans la zone de réaction, est conçue de manière que le quotient dT/dt (élévation de la température par unité de temps) est réglé et maintenu constant à une valeur comprise entre 0,7 et 1,2°C par seconde.

2. Procédé selon la revendication 1, caractérisé par le fait que le quotient dT/dt est réglé et maintenu constant à une valeur comprise entre 0,8 et 1,0°C par seconde.
